# EUROPEAN PATENT APPLICATION

(11) **EP 1 386 942 A1**
(43) Date of publication of application: **04.02.2004**
(21) Application number: 03008309.1
(22) Date of filing: 10.04.2003
(51) Int. Cl.: C08K 5/00, C09K 21/12

(54) **Flame retardant combination**

(30) Priority: 25.07.2002 EP 02016642
(71) Applicant: Clariant GmbH, 65929 Frankfurt am Main (DE)
(72) Inventor: Schlosser, Elke, 86163 Augsburg (DE); Nass, Bernd, 86152 Augsburg (DE); Wanzke, Wolfgang Dr., 86161 Augsburg (DE)
(74) Representative: Güthlein, Paul

(57) **Abstract**

The invention relates to a flame retardant combination comprising, as component A, a phosphinate of the formula (I) and/or a diphosphinate of the formula (II) and/or polymers of these 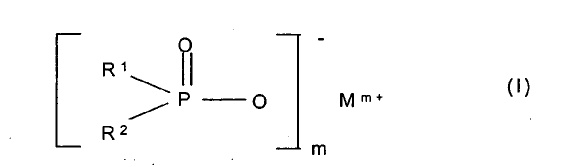 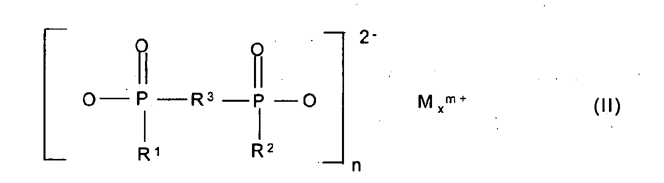 where
R¹ and R² are identical or different and are C₁-C₆-alkyl, linear or branched, and/or aryl; R³ is C₁-C₁₀-alkylene, linear or branched, C₆-C₁₀-arylene, -alkylarylene or -arylalkylene; M is calcium ions, magnesium ions, aluminum ions and/or zinc ions, m is 2 or 3; n is 1 or 3; x is 1 or 2; and comprising a component B1, B2 and/or B3 wherein B1 is a salt of 1,3,5-triazine compound with polyphosphoric acid, and wherein B2 is a melamine polymetaphosphate, and wherein B3 is a composite salt of polyphosphoric acid with melamine, melam and/or melem.

## Description

The invention relates to a novel flame retardant combination and to its use, in particular in thermoplastic polymers.

The salts of phosphinic acids (phosphinates) have proven to be effective flame-retardant additives, in particular for thermoplastic polymers (DE-A-2 252 258 and DE-A-2 447 727). Calcium phosphinates and aluminum phosphinates have been described as particularly effective in polyesters, and impair the material properties of the polymer molding compositions less than when the alkali metal salts, for example, are used (EP-A-0 699 708).

Synergistic combinations of phosphinates with certain nitrogen-containing compounds have also been found and in very many polymers act as more effective flame retardants than the phosphinates alone (PCT/EP97/01664, DE-A-197 34 437, DE-A-197 37 727, US-A 6,255,371).

The object of the present invention is therefore to provide improved flame retardant combinations which, even when used in small amounts, have excellent effectiveness as flame retardants in the appropriate plastics, in particular in thermoplastic polymers.

This object is achieved by a flame retardant combination comprising, as component A, a phosphinate of the formula (I) and/or a diphosphinate of the formula (II) and/or polymers of these 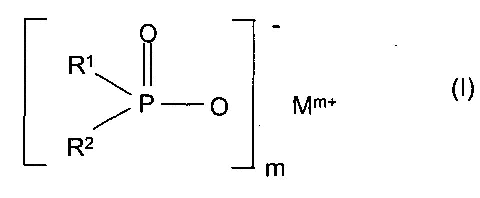 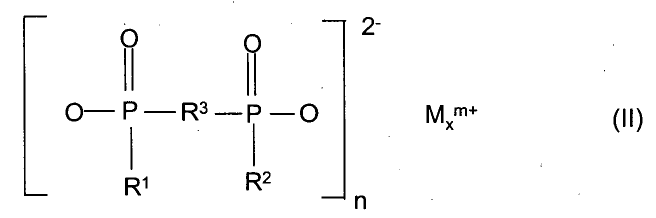 where
- R¹ and R²: are identical or different and are C₁-C₆-alkyl, linear or branched, and/or aryl;
- R³: is C₁-C₁₀-alkylene, linear or branched, C₆-C₁₀₋arylene, -alkylarylene or -arylalkylene;
- M: is magnesium, calcium, aluminum or zinc,
- m: is 2 or 3;
- n: is 1 or 3;
- x: is 1 or 2
and comprising, as component B, the component B1, B2 and/or B3 as described hereafter.

B1 is a salt of 1,3,5-triazine compound with polyphosphoric acid with a number average degree of condensation n is higher than 20 (preferably higher then 40) and with the melamine content amounting to more than 1.1 mole (preferably more than 1.2 mole) of melamine per mole of phosphorus atom.

Preferably the pH of a 10 % slurry of that polyphosphate salt in water is higher than or equal to 4,5.
The manufacture of such component B1 is described, for example, in WO 00/02869. The content of that publication is hereby included by reference. The 1,3,5-triazine compound is converted with orthophosphoric acid at room temperature into the phosphate of the 1,3,5-triazin compound, after which this salt is converted into the polyphosphate of the 1,3,5-triazin compound via a thermal treatment.

The prefered 1,3,5-triazine compounds are melam, melem, melon, especially melamine, or mixtures of these compounds.

B2 is a melamine polymetaphosphate having a sulubility of from 0,01 to 0,10 g/100 ml in water at 25°C, a pH from 2.5 to 4.5 in the form of a 10 wt.% aqueous slurry at 25°C and a melamine content of from 1,0 to 1,1 mol per mol of phosphorus atom. That component B2 and the process for its manufacture are described, for example, in WO 97/44377. The content of that publication is hereby included by reference. That component B2 is a melamine salt of a long-chain polyphosphoric acid represented by the formula (III)

(MHPO₃)ₙ

wherein M is melamine, H is a hydrogen atom, P is a phosphorus atom, and n is an integer and wherein the degree (n) of polymerization of a melamine salt of linear phosphoric acid is large.
Melamine is represented by the formula (IV)

C₃N₆H₆.

B3 is a composite salt of polyphosphoric acid with melamine, melam and/or melem having a solubility in water (25°C) of 0.01 to 0.10g/100ml, a pH of 4.0 to 7.0 as measured using a 10% by weight aqueous slurry (25°C), and melamine, melam and melem contents of 0.05 to 1.00 mol (preferably 0.05 to 0.40 mol), 0.30 to 0.60 mol (preferably 0.30 to 0.60 mol) and 0.05 to 0.80 mol (preferably 0.30 to 0.80 mol), respectively, per mol of phosphorus atoms.

The process for preparing a composite salt (double salt) of polyphosphoric acid with melamine, melam and melem (Component B3) having a solubility in water (25°C) of from 0.01 to 0.10g/100ml, a pH of from 4.0 to 7.0 as a 10 weight % aqueous slurry (25°C), and a melamine content of 0.05 to 1.00 mol, a melam content of 0.30 to 0.60 mol, a melem content of 0.05 to 0.80 mol, respectively, (or the preferred amounts mentioned above) per mol of phosphorus atom, consists of the following steps:
(a) obtaining a reaction product by mixing melamine and phosphoric acid at a temperature of from 0 to 330°C in such a ratio that the melamine is from 2.0 to 4.0 mols per mol of the phosphoric acid as calculated as orthophosphoric acid content, and
(b) a step of baking the reaction product obtained in step (a) at a temperature of from 340 to 450°C for from 0.1 to 30 hours. Preferably, the double salt has a low melamine content and a high melem content. In such case that aqueous slurry has a melamine content of from 0.05 to 0.40 mol, a melam content of from 0.30 to 0.60 mol and a melem content of from 0.30 to 0.80 mol, per mol of the phosphorus atom. In that preferred version of the process, the sublimate of the melamine is returned to the system and the formed ammonia is discharged out of the system during that step (b).

In that step (a) phosphoric acid is preferably an aqueous orthophosphoric acid solution having a concentration of orthophosphoric acid of not less than 50% by weight. In step (a), a mixing is carried out at a referred temperature of from 80 to 150°C. That component B3 and the process for its manufacture is described, for example, in more detail in WO 98/39306. The content of that publication is hereby included by reference.

That melamine, melam, melem double salt of a polyphosphoric acid (Component B3) is a melamine, melam, melem double salt of a chain polyphosphoric acid or a melamine, melam, melem double salt of metaphosphoric acid of the general formula (V):

α(MmH)₂O·β(MdH)₂O·γ(MPH)₂O·δP₂O₅

(wherein Mm represents melamine, Md represents melam, Mp represents melem. H represents a hydrogen atom, P represents a phosphorus atom, O represents an oxygen atom, and α, β, γ and δ represent positive numbers, having an interrelation of 1 ≦ (α+β+γ)/δ<2.
The melamine (Mm) is 2,4,6-triamino-1,3,5-triazine of the formula (VI):

C₃H₆N₅

The melam (Md) is (N-4,6-diamino-1,3,5-triazin-2-yl)-1,3,5-triazine-2,4,6-triamine of the formula (VII):

C₆H₉N₁₁

This is a 1,3,5-triazine derivative having two molecules of melamine condensed to have one molecule of ammonia desorbed therefrom.
The melem (Mp) is 2,5,8-triamino-1,3,4,6,7,9,9b-heptaazaphenalene of the formula (VIII):

C₈H₆N₁₀

This is a 1,3,5-triazine derivative having two molecules of melamine condensed to have two molucules of ammonia desorbed therefrom.

Surprisingly, it has now been found that the above mentioned combination, have markedly more effective flame retardancy than the known combinations of similar types.

R¹ and R² of the formula (I) are preferably identical or different and are C₁-C₆-alkyl, linear or branched, and/or aryl.

R¹ and R² are particularly preferably identical or different and are methyl, ethyl, n-propyl, isopropyl, n-butyl, tert-butyl, n-pentyl and/or phenyl.

R³ is preferably methylene, ethylene, n-propylene, isopropylene, n-butylene, tert.-butylene, n-pentylene, n-octylene, n-dodecylene,
or phenylene or naphthylene,
or methylphenylene, ethylphenylene, tert-butylphenylene, methylnaphthylene, ethylnaphthylene or tert-butylnaphthylene,
or phenylmethylene, phenylethylene, phenylpropylene or phenylbutylene.

M is preferably aluminum ions or zinc ions.

The invention also relates to the use of the novel flame retardant combination for rendering thermoplastic polymers flame-retardant.

For the purposes of the present invention, thermoplastic polymers are, as stated by Hans Domininghaus in "Die Kunststoffe und ihre Eigenschaften", 5^{th} Edition (1998), p. 14, polymers having molecular chains with no side branches or with side branches varying in their length and number, and which soften when heated and can be shaped in almost any desired way.

The thermoplastic polymers are preferably HIPS (high-impact polystyrene), polyphenylene ethers, polyamides, polyesters, polycarbonates and blends or polymer blends of the type ABS (acrylonitrile-butadiene-styrene) or PC/ABS (polycarbonate/acrylonitrile-butadiene-styrene) or PPE/HlPS (polyphenylene ether/high-impact polystyrene). High-impact polystyrene is a polystyrene with increased impact strength.

Particularly preferred thermoplastic polymers are polyamides, polyesters and blends of PPE/HlPS.

Thermoplastic polymers which comprise the novel flame retardant combinations and, if desired, fillers and reinforcing materials and/or other additives, as defined below, are hereinafter termed plastic molding compositions.

For the above mentioned use it is preferable for each of the components A and B, independently of one another, to be used at a concentration of from 1 to 30% by weight, based on the plastic molding composition.

For the above mentioned use it is preferable for each of the components A and B, independently of one another, to be used at a concentration of from 3 to 20% by weight, based on the plastic molding composition.

For the above mentioned use it is preferable for each of the components A and B, independently of one another, to be used at a concentration of from 3 to 15% by weight, based on the plastic molding composition.

Finally, the invention also provides a flame-retardant plastic molding composition comprising the novel flame retardant combination.

The plastic is preferably thermoplastic polymers of the type HIPS (high-impact polystyrene), polyphenylene ethers, polyamides, polyesters, polycarbonates and blends or polymer blends of the type ABS (acrylonitrile-butadiene-styrene) or PC/ABS (polycarbonate/acrylonitrile-butadiene-styrene) or PPE/HlPS (polyphenylene ether/high-impact polystyrene).

The polymers of the flame-retardant plastic molding composition are particularly preferably polyamide or polyester or blends of PPE/HlPS.

The thermoplastic polymers in which the novel flame retardant combinations can be used effectively are described in the international patent application PCT/WO 97/01664.

These include:
1. Polymers of mono- or diolefins, for example polypropylene, polyisobutylene, polybutylene, poly-1-butene, polyisoprene and polybutadiene, and also polymers of cycloolefins, for example of cyclopentene or of norbornene; also polyethylene, which may have crosslinking if desired; e.g. high-density polyethylene (HDPE), high-density high-molecular-weight polyethylene (HDPE-HMW), high-density ultrahigh-molecular-weight polyethylene (HDPE-UHMW), medium-density polyethylene (MDPE), low-density polyethylene (LDPE), linear low-density polyethylene (LLDPE), or low-density branched polyethylene (VLDPE).
2. Mixtures of the above mentioned polymers, for example mixtures of polypropylene with polyisobutylene, polypropylene with polyethylene (e.g.: PP/HDPE, PP/LDPE) and mixtures of various polyethylene grades, for example LDPE/HDPE.
3. Copolymers of mono- or of diolefins with one another or with other vinyl monomers, e.g. ethylene-propylene copolymers, linear low-density polyethylene (LLDPE) and mixtures of the same with low-density polyethylene (LDPE), propylene-1-butene copolymers, propylene-isobutylene copolymers, ethylene-1-butene copolymers, etc.; and also ethylene-alkyl acrylate copolymers, ethylene-vinyl acetate copolymers and copolymers of these with carbon monoxide, and ethylene-acrylic acid copolymers and salts of these (ionomers), and also terpolymers of ethylene with propylene and with a diene, such as hexadiene, dicyclopentadiene or ethylidenenorbornene; and also mixtures of copolymers of this type with one another or with the polymers mentioned under 1., e.g. polypropylene/ethylene-propylene copolymers, LDPE/ethylene-vinyl acetate copolymers, LDPE/ethylene-acrylic acid copolymers, LLDPE/ethylene-vinyl acetate copolymers, LLDPE/ethylene-acrylic acid copolymers, and polyalkylene-carbon monoxide copolymers of alternating or random structure and mixtures of these with other polymers, e.g. with polyamides.
4. Polystyrene, poly(p-methylstyrene), poly(α-methylstyrene).
5. Copolymers of styrene or α-methylstyrene with dienes or with acrylics, e.g. styrene-butadiene, styrene-acrylonitrile, styrene-alkyl methacrylate, styrene-butadiene-alkyl acrylate, styrene-butadiene-alkyl methacrylate, styrene-maleic anhydride, styrene-acrylonitrile-methacrylate; high-impact-strength mixtures made from styrene copolymers with another polymer, e.g. with a polyacrylate, with a diene polymer or with an ethylene-propylene-diene terpolymer; and also block copolymers of styrene, e.g. styrene-butadiene-styrene, styrene-isoprene-styrene, styrene-ethylene/butylene-styrene or styrene-ethylene/propylene-styrene.
6. Graft copolymers of styrene or α-methylstyrene, e.g. styrene on polybutadiene, styrene on polybutadiene-styrene copolymers or on polybutadiene-acrylonitrile copolymers, styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleic imide on polybutadiene, styrene and maleimide on polybutadiene; styrene and alkyl acrylates and, respectively, alkyl methacrylates on polybutadiene; styrene and acrylonitrile on ethylene-propylene-diene terpolymers; styrene and acrylonitrile on polyalkyl acrylates or on polyalkyl methacrylates; styrene and acrylonitrile on acrylate-butadiene copolymers, and also mixtures of these with the polymers mentioned under 5., known as ABS polymers, MBS polymers, ASA polymers or AES polymers, for example.
7. Halogen-containing polymers, e.g. polychloroprene, chlorinated rubber, chlorinated or brominated copolymer made from isobutylene-isoprene (halogenated butyl rubber), chlorinated or chlorosulfonated polyethylene, copolymers of ethylene with chlorinated ethylene, epichlorohydrin homo- and copolymers, in particular polymers made from halogen-containing vinyl compounds, e.g. polyvinyl chloride, polyvinylidene chloride, polyvinyl fluoride, polyvinylidene fluoride; and also copolymers of these, for example vinyl chloride-vinylidene chloride, vinyl chloride-vinyl acetate and vinylidene chloride-vinyl acetate.
8. Polymers derived from α,β-unsaturated acids or from derivatives of these, for example polyacrylates and polymethacrylates, butyl-acrylate-impact-modified polymethyl methacrylates, polyacrylamides and polyacrylonitriles.
9. Copolymers of the monomers mentioned under 8. with one another or with other unsaturated monomers, e.g. acrylonitrile-butadiene copolymers, acrylonitrile-alkyl acrylate copolymers, acrylonitrile-alkoxyalkyl acrylate copolymers, acrylonitrile-vinyl halide copolymers and acrylonitrile-alkyl methacrylate-butadiene terpolymers.
10. Polymers derived from unsaturated alcohols and amines and respectively, from their acetyl derivatives or acetals, for example polyvinyl alcohol, polyvinyl acetate, polyvinyl stearate, polyvinyl benzoate, polyvinyl maleate, polyvinyl butyral, polyallylphthalate, polyallylmelamine; and also copolymers of these with the olefins mentioned under 1.
11. Polyacetals, such as polyoxymethylene, and also those polyoxymethylenes which contain comonomers, e.g. ethylene oxide; polyacetals modified with thermoplastic polyurethanes, with acrylates or with MBS.
12. Polyphenylene oxides, polyphenylene sulfides and mixtures of these oxides or sulfides with styrene polymers or with polyamides.
13. Polyamides and copolyamides derived from diamines and from dicarboxylic acids and/or from aminocarboxylic acids or from the corresponding lactams, for example nylon-4, nylon-6, nylon-6,6, 6,10, 6,9, 6,12, 4,6, 12,12, nylon-11, nylon-12, aromatic polyamides based on m-xylene, diamine and adipic acid; polyamides prepared from hexamethylenediamine and iso- and/or terephthalic acid and, if desired, from an elastomer as modifier, e.g. poly-2,4,4-trimethylhexamethylene-terephthalamide or poly-m-phenyleneisophthalamide. Block copolymers of the above mentioned polyamides with polyolefins, with olefin copolymers, with ionomers or with chemically bonded or grafted elastomers; or with polyethers, e.g. with polyethylene glycol, polypropylene glycol or polytetramethylene glycol. EPDM- or ABS-modified polyamides or copolyamides; and also polyamides condensed during processing ("IM polyamide systems").
14. Polyureas, polyimides, polyamideimides, polyetherimides, polyesterimides, polyhydantoins and polybenzimidazoles.
15. Polyesters derived from dicarboxylic acids and from dialcohols and/or from hydroxycarboxylic acids or from the corresponding lactones, for example polyethylene terephthalate, polybutylene terephthalate, poly-1,4-dimethylol-cyclohexane terephthalate, polyhydroxybenzoates, and also block polyetheresters derived from polyethers having hydroxyl end groups; polyesters modified with polycarbonates or with MBS.
16. Polycarbonates and polyester carbonates.
17. Polysulfones, polyether sulfones and polyether ketones.
18. Mixtures (polyblends) of the above mentioned polymers, e.g. PP/EPDM, polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PU, PC/thermoplastic PU, POM/acrylate, POM/MBS, PPO/HIPS, PPO/nylon-6,6 and copolymers.

The term "phosphinate" used below covers salts of phosphinic and of diphosphinic acid and polymers of these.

The phosphinates, which are prepared in an aqueous medium, are essentially monomeric compounds. Depending on the reaction conditions, polymeric phosphinates can be produced under some circumstances.

Examples of phosphinic acids suitable as a constituent of the phosphinates are: Dimethylphosphinic acid, ethylmethylphosphinic acid, diethylphosphinic acid, methyl-n-propylphosphinic acid, methanedi(methylphosphinic acid), benzene-1,4-(dimethylphosphinic acid), methylphenylphosphinic acid and diphenylphosphinic acid.

The phosphinates according to the invention may be prepared by known methods, for example as described in some detail in EP-A-0 699 708. The phosphinic acids are reacted, for example, in aqueous solution with metal carbonates, with metal hydroxides or with metal oxides.

The amount of the phosphinate to be added to the polymers may vary within wide limits. Use is generally made of from 1 to 30% by weight, based on the plastic molding composition. The ideal amount depends on the nature of the polymer and on the type of component B, and on the type of phosphinate itself used. Preference is given to from 3 to 20% by weight, in particular from 3 to 15% by weight, based on the plastic molding composition.

The above mentioned phosphinates may be used in various physical forms for the novel flame retardant combination, depending on the nature of the polymer used and on the properties desired. For example, to achieve better dispersion in the polymer the phosphinate may be ground to a fine-particle form. Mixtures of different phosphinates may also be used, if desired.

The phosphinates as used according to the invention in the flame retardant combination are thermally stable, and neither decompose the polymers during processing nor affect the process of preparing the plastic molding composition. The phosphinates are not volatile under the customary conditions of preparation and processing of thermoplastic polymers.

The amount of the component B to be added to the polymers may likewise vary within wide limits. Use is generally made of from 1 to 30% by weight, based on the plastic molding composition. The ideal amount depends on the nature of the polymer, on the nature of the phosphinate used (component A) and on the nature of the component (B). Preferred amounts are from 3 to 20% by weight, in particular from 3 to 15% by weight.

The flame-retardant components A and B may be incorporated into thermoplastic polymers by, for example, premixing all of the constituents in powder and/or pellet form in a mixer and then homogenizing these in a polymer melt in a compounding assembly (e.g. a twin-screw extruder). The melt is usually drawn off as an extrudate, cooled and pelletized. Components A and B may also be introduced separately by way of a metering system directly into the compounding assembly.
It is also possible to admix the flame-retardant components A and B with finished polymer pellets or powder, and to process the mixture directly on an injection molding machine to give moldings.
In the case of polyesters, for example, the flame-retardant additives A and B may also be added into the polyester composition as early as during the polycondensation.

Besides the novel flame retardant combination made from A and B, fillers and reinforcing material, for example glass fibers, glass beads or minerals, such as chalk, may be added to the molding compositions. The molding compositions may also comprise other additives, such as antioxidants, light stabilizers, lubricants, colorants, nucleating agents or antistats. Examples of additives which may be used are given in EP-A-584 567.

The flame-retardant plastic molding compositions are suitable for producing moldings, films, filaments or fibers, for example by injection molding, extrusion or pressing.

### Examples

Chemicals used:

| Polymer (granule) | |
|---|---|
| Polyamide 6.6 (PA 6.6-GV) | ® Durethan AKV 30 (Bayer AG, D) contains 30 % glass fibres |

### Flame retardants:

Component A: aluminium salt of diethylphosphinic acid, called DEPAL in the following
Component B1: melamine polyphosphate, degree of condensation (31P-NMR) higher than 20, pH of a 10% slurry 4,9, 43% nitrogen, 13% phosphorus;
Component B2: melamine polyphosphate, pH of a 10% slurry 2,9, 40% nitrogen, 14,4% phosphorus;
Component B3: melamine polyphosphate, pH of a 10% slurry 4,5, 43% nitrogen, 13% phosphorus, contains 0,3 mol% melem (XRD);
Component C (comparison): melamine pyrophosphate Budit 311 (Chemische Fabrik Budenheim, D), degree of condensation (31P-NMR) 2, pH of a 10% slurry 4,1, 39% nitrogen, 14% phosphorus;

**Table 1:**

| Flame retarded glass fibre reinforced polyamide 6.6 compounds. Examples 1-4 are for comparison, example 5-7 are according to the invention | | | | | | |
|---|---|---|---|---|---|---|
| Example | A | B1 | B2 | B3 | C | UL 94 (0.8 mm) class |
| 1 comp. | 20 | | | | | n.c. |
| 2 comp. | | 20 | | | | n.c. |
| 3 comp. | | | 20 | | | n.c. |
| 3 comp. | | | | 20 | | n.c. |
| 4 comp. | 10 | | | | 10 | n.c. |
| 5 inv. | 10 | 10 | | | | V-0 |
| 6 inv. | 10 | | 10 | | | V-0 |
| 7 inv. | 10 | | | 10 | | V-0 |
| n.c. = not classified | | | | | | |

The use of component A, B1, B2 or B3 as the only flame retardant in polyamide 6.6 does not gve the required flame retardancy. The combination of component A with a melamine pyrophosphate (component C) does not give a sufficient flame retardancy. The combination of Depal with the melamine polyphosphate B1, B2 or B3 according to the invention give a UL 94 V-0 classification.

## Claims

1. A flame retardant combination comprising, as component A, a phosphinate of the formula (I) and/or a diphosphinate of the formula (II) and/or polymers of these 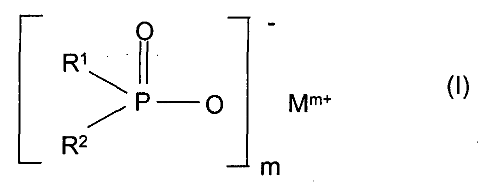 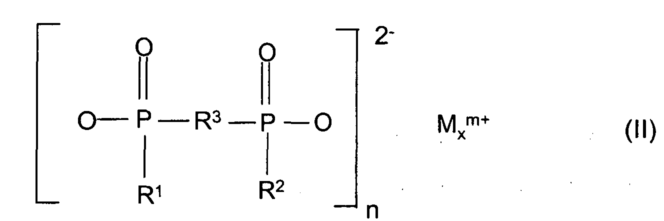 where
R¹ and R² are identical or different and are C₁-C₆-alkyl, linear or branched, and/or aryl;
R³ is C₁-C₁₀-alkylene, linear or branched, C₆-C₁₀-arylene, -alkylarylene or -arylalkylene;
M is calcium ions, magnesium ions, aluminum ions and/or zinc ions,
m is 2 or 3;
n is 1 or 3;
x is 1 or 2;
and comprising a component B1, B2 and/or B3 wherein
B1 is a salt of 1,3,5-triazine compound with polyphosphoric acid with a number average degree of condensation n is higher than 20 and with the melamine content amounting to more than 1.1 mole of melamine per mole of phosphorus atom, and a preferred pH of a 10 % slurry of that polyphosphate salt in water being higher than or equal to 4,5, wherein the prefered 1,3,5-triazine compounds are melam, melem, melon, especially melamine, or mixtures of these compounds, and
wherein B2 is a melamine polymetaphosphate having a sulubility of from 0,01 to 0,10 g/100 ml in water at 25°C, a pH from 2.5 to 4.5 in the form of a 10 wt.% aqueous slurry at 25°C and a melamine content of from 1,0 to 1,1 mol per mol of phosphorus atom, wherein that component B2 is a melamine salt of a long-chain polyphosphoric acid represented by the formula (lll)
(MHPO₃)ₙ
wherein M is melamine, represented by the formula (IV)
C₃N₆H₆.
H is a hydrogen atom, P is a phosphorus atom, and the degree (n) of polymerization of said melamine salt of linear phosphoric acid is an integer of at least 20, and
wherein B3 is a composite salt of polyphosphoric acid with melamine, melam and/or melem having a solubility in water (25°C) of 0.01 to 0.10g/100ml, a pH of 4.0 to 7.0 as measured using a 10% by weight aqueous slurry (25°C), and melamine contents of 0.05 to 1.00 mol (preferably 0.05 to 0.40 mol), melam contents of 0.30 to 0.60 mol (preferably 0.30 to 0.60 mol) and melem contents of 0.05 to 0.80 mol (preferably 0.30 to 0.80 mol), respectively, per mol of phosphorus atoms.

2. A flame retardant combination as claimed in claim 1, wherein R¹ and R² are identical or different and are C₁-C₆-alkyl, linear or branched and/or phenyl.

3. A flame retardant combination as claimed in claim 1 or 2, wherein R¹ and R² are identical or different and are methyl, ethyl, n-propyl, isopropyl, n-butyl, tert-butyl, n-pentyl and/or phenyl.

4. A flame retardant combination as claimed in one or more of claims 1 to 3, wherein R³ is methylene, ethylene, n-propylene, isopropylene, n-butylene, tert-butylene, n-pentylene, n-octylene or n-dodecylene.

5. A flame retardant combination as claimed in one or more of claims 1 to 3, wherein R³ is phenylene or naphthylene.

6. A flame retardant combination as claimed in one or more of claims 1 to 3, wherein R³ is methylphenylene, ethylphenylene, tert-butylphenylene, methylnaphthylene, ethylnapthylene or tert-butylnaphthylene.

7. A flame retardant combination as claimed in one or more of claims 1 to 3, wherein R³ is phenylmethylene, phenylethylene, phenylpropylene or phenylbutylene.

8. A flame retardant combination as claimed in one or more of claims 1 to 7, wherein M is aluminum ions or zinc ions.

9. The use of a flame retardant combination as claimed in one or more of claims 1 to 8 for rendering thermoplastic polymers flame retardant, wherein the thermoplastic polymers are HIPS (high-impact polystyrene), polyphenylene ethers, polyamides, polyesters, polycarbonates or blends or polymer blends of the type ABS (acrylonitrile-butadiene-styrene) or PC/ABS (polycarbonate/acrylonitrile-butadiene-styrene) or PPE/HlPS (polyphenylene ether/high-impact polystyrene), or polyamide, polyester or blends of PPE/HIPS.

10. The use of a flame retardant combination as claimed in claim 9, wherein each of the components A and B, independently of one another, is used at a concentration of from 1 to 30 preferably 3 to 20 % by weight, based on the plastic molding composition.

11. A flame-retardant plastic molding composition comprising a flame retardant combination as claimed in one or more of claims 1 to 8, where in the plastic is preferably a thermoplastic polymer selected from the type HIPS (high-impact polystyrene), polyphenylene ethers, polyamides, polyesters, polycarbonates or blends or polymer blends of the type ABS (acrylonitrile-butadiene-styrene) or PC/ABS (polycarbonate/ acrylonitrile-butadiene-styrene) or PPE/HIPS (polyphenylene ether/high-impact polystyrene) plastics, or wherein the plastic is polyamides, polyesters or blends of PPE/HIPS.
